# EUROPÄISCHE PATENTSCHRIFT

(11) **EP 1 032 480 B1**
(45) Veröffentlichungstag und Bekanntmachung des Hinweises auf die Patenterteilung: **02.10.2002**
(21) Anmeldenummer: 98964360.6
(22) Anmeldetag: 17.11.1998
(51) Int. Cl.: B21J 1/00

(54) **VERFAHREN UND VORRICHTUNG ZUM VERBINDEN ÜBERLAPPT ANGEORDNETER FÜGETEILE**
METHOD AND DEVICE FOR THERMALLY SUPPORTING MECHANICAL JOINTS
PROCEDE ET DISPOSITIF POUR L'ASSEMBLAGE MECANIQUE ASSISTE PAR CHAUFFAGE

(30) Priorität: 17.11.1997 DE 19750831; 17.11.1998 DE 19852809
(43) Veröffentlichungstag der Anmeldung: 06.09.2000
(73) Patentinhaber: Technische Universität Dresden, 01069 Dresden (DE); Kerb-Konus-Vertriebs-GmbH, 92224 Amberg (DE); ABB Daimler-Benz Transportation (Technology) GmbH, 16761 Hennigsdorf (DE)
(72) Erfinder: LIEBRECHT, Fritz, D-01309 Dresden (DE); MAUERMANN, Reinhard, D-01309 Dresden (DE); DONHAUSER, Georg, D-92224 Amberg (DE); CARSTENSEN, Hartmut, D-13507 Berlin (DE)
(86) Internationale Anmeldenummer: DE9803393
(87) Internationale Veröffentlichungsnummer: WO99025510

(56) Entgegenhaltungen:
- WO-A-93/10925
- DE-C- 3 932 294
- US-A- 3 878 356
- US-A- 4 858 289
- US-A- 5 678 970

## Beschreibung

Die Erfindung betrifft ein Verfahren zum Verbinden überlappt angeordneter Fügeteile gemäß dem Oberbegriff des Anspruches 1 (siehe z. B. WO-A-9310925). Die Erfindung betrifft außerdem eine Vorrichtung zur Durchführung des Verfahrens gemäß dem Oberbegriff des Anspruches 9.

Zum Verbinden von Blechen ist z.B. das Widerstandspunktschweißen bekannt. Bei diesem Verfahren werden die Bleche örtlich begrenzt aufgeschmolzen und in der Schmelzzone miteinander verbunden. Wegen der auftretenden Gefügeveränderung in der Schmelzzone sind die Bleche in diesem Bereich geringer mechanisch belastbar.

Zum mechanischen Fügen sind weiterhin Verfahren bekannt wie:
- das Durchsetzen
- das Stanznieten mittels Halbhohlniet
- das Stanznieten mittels Vollniet.

Die Herstellung der mechanischen Verbindung wird bei Raumtemperatur durchgeführt. Nachteilig bei diesen Verfahren ist, daß der mechanische Fügeprozeß zu einer teilweise extremen Kaltverfestigung in der Verbindungszone führt. Die entsprechenden Vorrichtungen müssen für hohe Kräfte ausgelegt werden, ebenso die Werkzeuge. Die Hilfsfügeteile wie Halbhohlniet und Vollniet werden unerwünscht deformiert bis zerstört. Deswegen ist die Verwendung hochfester Bleche stark eingeschränkt.

Aus der WO 93 10925 ist ein Verfahren zum Verbinden überlappt angeordneter Fügeteile mit Hilfe eines aus Stempel, Niederhalter und Matrize bestehenden Fügewerkzeuges, durch Fügen mittels Stanznieten mit Halbhohlniet oder Vollniet bekannt. Bei der Ausbildung der Fügeverbindung wird das innere Ende des Halbhohl- oder Vollnietes durch die Gestaltung der Matrize radial nach außen verformt. Damit wird eine Erhöhung der Festigkeit der Fügeverbindung angestrebt.
Bei Verwendung von hochfesten Blechen kommt es zu der erwähnten Beanspruchung der Werkzeuge und Hilfsfügeteile.

Aus der US 4 858 289 ist ein Verfahren zum Herstellen einer Nietverbindung bekannt, bei dem die Fügeteile mittels Durchbohren durchlocht werden, und anschließend konventionell genietet wird. Während des Prozeßschrittes des Vorprägens werden die Fügeteile durch Konvektion erwärmt, wobei die Erwärmung von dem direkt erhitzten Werkzeug ausgeht. Damit unterscheidet sich dieses Verfahren grundsätzlich von der vorliegenden Erfindung.

Die Aufgabe der Erfindung besteht darin, ein Verfahren sowie eine Vorrichtung anzugeben, welche beim Stanznieten mittels Halbhohlniet oder Vollniet bzw. beim Durchsetzen den Einsatz von hochfesten Werkstoffen, auch bei einem extremen Verfestigungsgrad, wie bei austenitischen Edelstählen, ermöglicht.

Erfindungsgemäß wird die Aufgabe durch ein Verfahren mit den im Anspruch 1 genannten Merkmalen gelöst. Die Aufgabe wird weiterhin durch eine Vorrichtung mit den im Anspruch 9 genannten Merkmalen gelöst. Weiterbildungen und Ausgestaltungen sind Gegenstand von Unteransprüchen.

Wesentlich an der Erfindung ist, daß in der künftigen Umformzone eine lokal und zeitlich begrenzte Erwärmung der Fügeteile durch elektrische Widerstandserwärmung erfolgt, wobei die Erwärmung durch Niederhalter und Matrize oder diesen bei oder vorgeordneten Elementen erfolgt und die Erwärmung mit Beginn des Fügeprozesses oder unmittelbar davor ausgelöst wird und vor dem Beginn der Umformung in der Umformzone abgeschlossen ist.

Vorteilhaft erfolgt in einer ersten Variante des Verfahrens die Erwärmung direkt zwischen einem Niederhalter und einer Matrize, wobei die Erwärmung mit dem Beginn des Arbeitshubes ausgelöst wird. Der Niederhalter ist dazu mit einer schrägen Auflagefläche und die Matrize mit einem Ring versehen.

Bei einer vorteilhaften zweiten Verfahrensvariante erfolgt die Erwärmung zwischen einem oberen Ring aus einem oder mehreren Kontaktschuhen und einem unteren Ring aus einem oder mehreren Kontaktschuhen, die jeweils um Niederhalter und Matrize angeordnet sind, wobei die Erwärmung mit dem Beginn des Arbeitshubes ausgelöst wird.

Bei einer dritten vorteilhaften Verfahrensvariante erfolgt die Erwärmung zwischen einer ersten Elektrode und einer zweiten Elektrode, die einer ersten Station zugeordnet sind und die Umformung wird zeitlich anschließend in einer zweiten Station durchgeführt, wobei die Erwärmung unmittelbar vor dem Beginn der Umformung ausgelöst wird.

Von der Erwärmung sind nicht primär die Werkzeuge oder die Hilfsfügeteile betroffen, sondern die Erwärmung erstreckt sich in den zu fügenden Teilen auf den Bereich, in dem der Umformgrad am größten ist. Die Erwärmung ist dabei vor dem Beginn der Umformung abgeschlossen und setzt entweder nach dem Start des Arbeitshubes ein oder unmittelbar vor dem Arbeitshub einer der Umformung vorgelagerten Station. Damit läßt sich die Erwärmung gut steuern und der Energieeintrag auf ein Minimum beschränken.
Nach der Umformung setzt ein sofortiges Erkalten der Fügestelle ein. Dies wird erreicht, indem eine minimale Wärmemenge eingetragen wird, und eine genaue zeitliche Abstimmung von Niederhalterhub/Erwärmung/Umformung erfolgt.

Zur Durchführung des Verfahrens sind der Niederhalter und die Matrize oder diesen bei- oder vorgeordnete Elemente als Pole zur elektrischen Widerstandserwärmung ausgebildet, wobei Niederhalter, Matrize, Kontaktschuh mit entsprechenden Auflageflächen versehen sind, so daß sich durch die Fügepartner Stromlinien in örtlich begrenzter Ausbildung erstrecken, die den Erwärmungsbereich begrenzen.
Bei einer ersten Vorrichtung ist der Niederhalter mit einer Schräge versehen und die Matrize weist eine ringförmige Erhebung auf.
Bei einer zweiten Vorrichtung sind ein oberer Ring aus einem oder mehreren Kontaktschuhen, der um einen Niederhalter angeordnet ist, und ein unterer Ring aus einem oder mehreren Kontaktschuhen, der um eine Matrize angeordnet ist, vorgesehen, wobei die Auflageflächen der Kontaktschuhe sehr nah an Niederhalter und Matrize angeordnet sind und der Erwärmungsbereich dadurch eingegrenzt ist.
Bei einer dritten Vorrichtung sind Elektroden zur Erwärmung der Fügepartner in einer Station vorgesehen, die der Station zur Umformung vorgelagert ist.

Der Vorteil der Erfindung besteht darin, daß das bekannte Stanznieten mittels Halbhohlniet oder mit Vollniet bzw. Durchsetzen, auch beim Einsatz von hochfesten Werkstoffen, auch mit extremem Verfestigungsgrad eingesetzt werden kann, wobei es zu keiner Beeinträchtigung der Qualität der Fügestelle durch Überbeanspruchung der Hilfsfügeteile bzw. des Grundwerkstoffes während des Fügens kommt. Durch die Abkühlung an der Fügestelle erhöht eine radiale Vorspannung im Fügepunkt die Festigkeit der Verbindung.

Die Erfindung wird nachfolgend an einem Ausführungsbeispiel für das Verfahren und die Vorrichtung näher erläutert. In den Zeichnungen zeigen:
- Fig. 1a - 1e: einzelne Phasen einer mechanischen Fügung am Beispiel des Vollstanznietens dargestellt,
- Fig. 2: schematisch ein Ausführungsbeispiel der erfindungsgemäßen Vorrichtung mit Darstellung der Fügeteile ohne Hilfsfügeteil
- Fig. 3: ein zur Fig. 2 gehöriger Kühlkörper
- Fig. 4: ein Ausführungsbeispiel der erfindungsgemäßen Vorrichtung mit je einem Kontaktschuh um Niederhalter und Matrize
- Fig. 5: ein Ausführungsbeispiel der erfindungsgemäßen Vorrichtung mit Elektroden zur Erwärmung in einer ersten Station und der Fügevorrichtung in einer zweiten Station

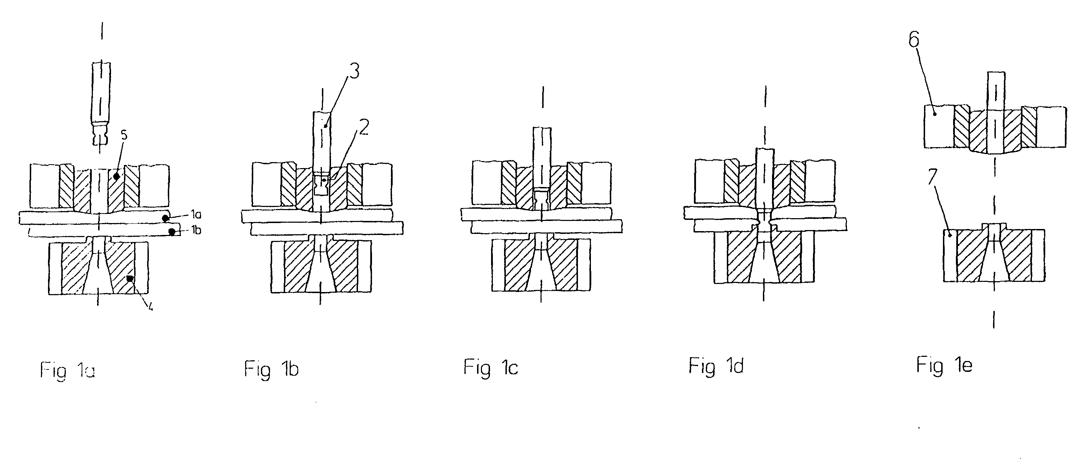

In den Fig. 1a bis 1e sind die einzelnen Phasen einer mechanischen Fügung am Beispiel des Stanznietens mittels Vollniet dargestellt. Bei der Darstellung ist die erfindungsgemäße Vorrichtung mit einbezogen. Auf der Matrize **4** liegen die Fügeteile **1a** und **1b.** In der Fig. 1a ist der Niederhalter **5** aufgesetzt. Der Niederhalter **5** ist elektrisch von der Matrize **4** entkoppelt. Beide Teile bilden die Pole für eine elektrische Widerstandserwärmung. Mit dem Aufsetzen des Niederhalters **5** auf das stempelseitige Blech **1a** und ggf dem Eindrücken des Bleches **1a** mit der schrägen Stirnseite des Niederhalters **5,** beginnt die Erwärmung durch elektrische Impulse. Die Schräge am Niederhalter **5** ermöglicht die Verringerung des Übergangswiderstandes zwischen dem Niederhalter **5** und dem stempelseitigen Blech **1a** auf solche Weise, daß der Stromfluß und damit die gewünschte Erwärmung in der späteren Umformzone - also im Bereich des Außendurchmessers des Vollnietes **2** - liegt.

In der Fig. 1b ist die Erwärmungsphase dargestellt. Während der Vorschubbewegung von Stempel **3** und Vollniet **2** wird die lokale Erwärmung realisiert.
Mit dem Aufsetzen des Vollnietes **2** entsprechend der Fig. 1c auf dem Blech **1a** ist die Erwärmung beendet und der Umformvorgang beginnt. Die Steuerung der elektrischen Widerstandserwärmung wird über Zeitglieder oder Sensoren realisiert.
Entsprechend der Fig. 1d ist der Umformvorgang beendet und die lokal eingebrachte Wärmemenge kann sich rasch in den Blechen **1a** und **1b** verteilen.
Gemäß der Fig. 1e befinden sich der Niederhalter **5**, Stempel **3** und Kühlkörper **6** im oberen Totpunkt. Die Kühlung der Werkzeuge wird durch die Kühlkörperanordnung **6,7** realisiert, welche vorzugsweise aus Kupfer gefertigt sind.

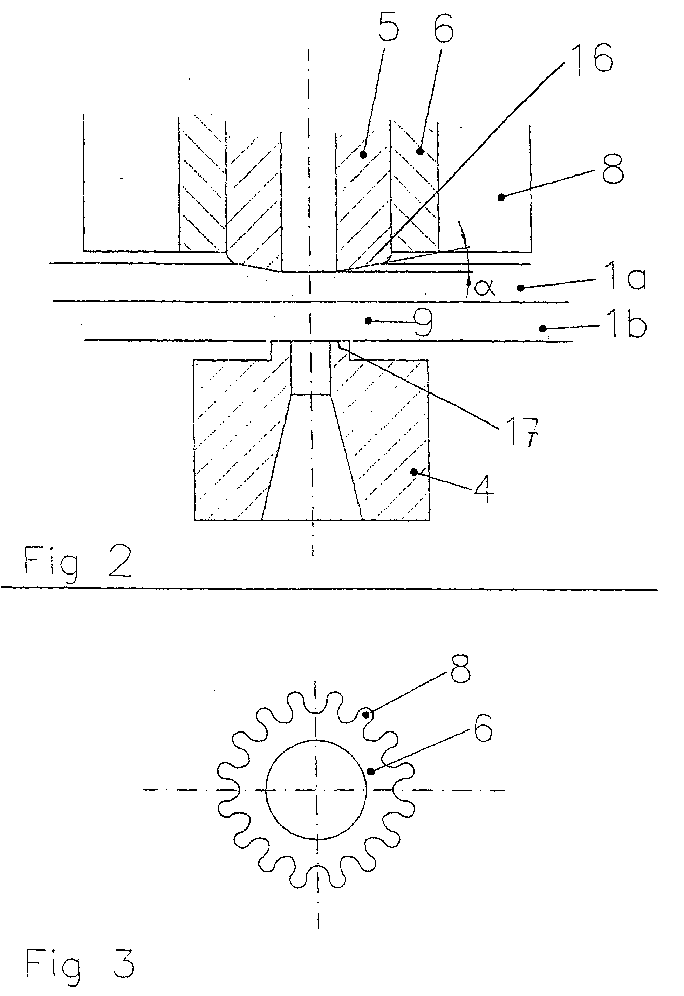

In der Fig. 2 ist eine erfindungsgemäße Vorrichtung dargestellt, bei der der Verlauf der Stromlinien **9** gezeigt ist. Durch die Vorrichtung wird die Erwärmung zwischen den als Pole geschalteten Werkzeugen, Niederhalter **5** und Matrize **4** über die Auflageflächen **16,17** auf engstem Raum lokalisiert, wie durch den Verlauf der Stromlinien **9** verdeutlicht.

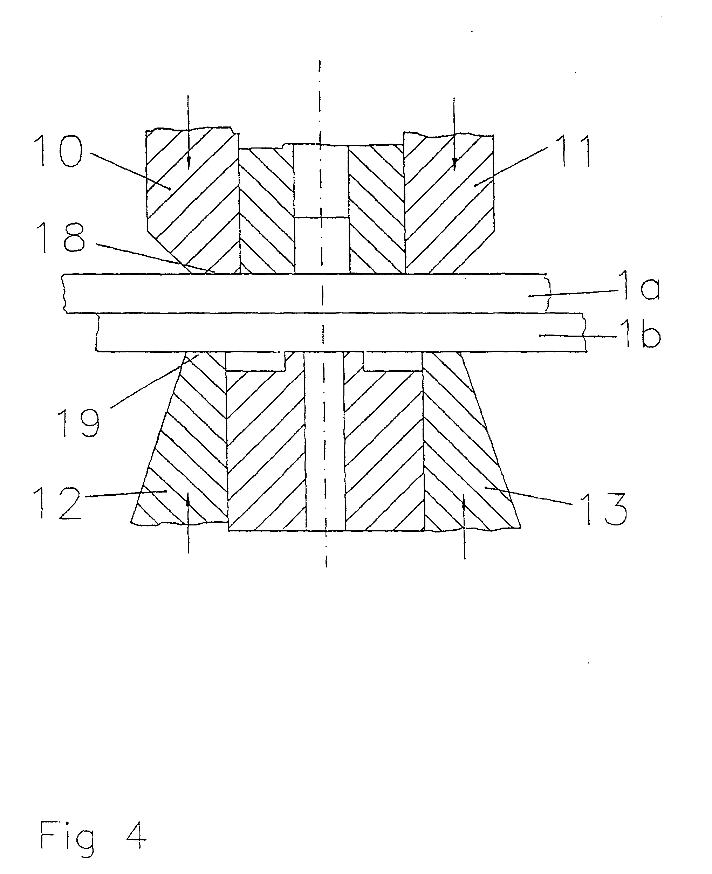

Fig. 3 zeigt einen zugehörigen Kühlkörper **6,** der um den Niederhalter **5** angeordnet ist. Der Kühlkörper **6** ist am Außenrand mit Luftkühlrippen **8** versehen, und kann bei hohen Hubzahlen auch wassergekühlt werden.

Fig. 4 zeigt eine weitere erfindungsgemäße Vorrichtung bei der ein Ring aus Kontaktschuhen **10,11** um den Niederhalter **5** und ein Ring aus Kontaktschuhen **12,13** um die Matrize **4** angeordnet ist. Die Auflageflächen **18,19** der Kontaktschuhe **10, 12** sind sehr nah an Niederhalter **5** und Matrize **4** angeordnet und der Erwärmungsbereich in den Blechen **1a,1b** wird dadurch eingegrenzt.

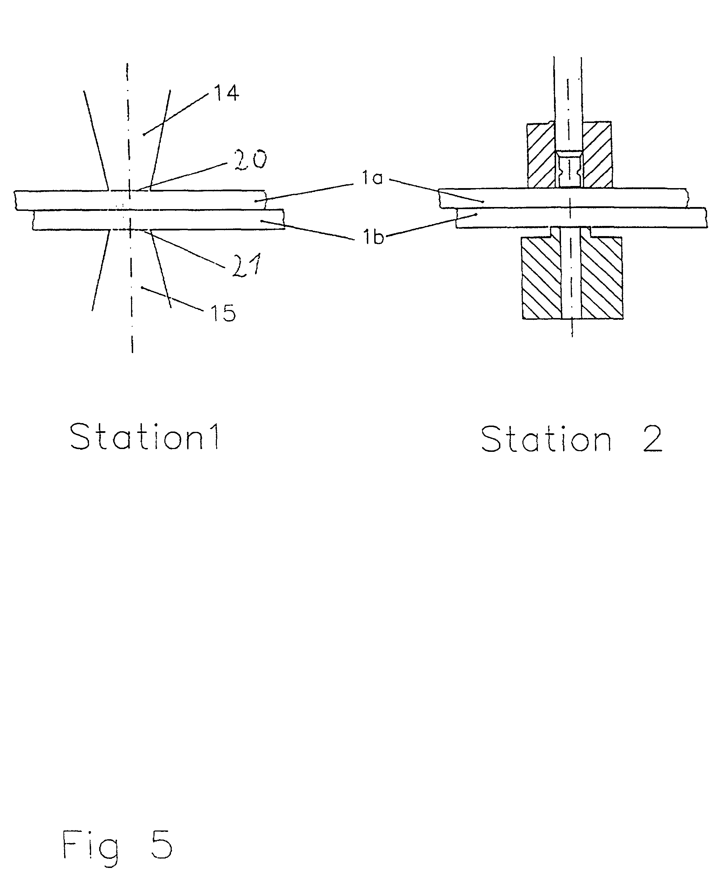

Fig. 5 zeigt schließlich eine erfindungsgemäße Vorrichtung bei der Elektroden **14,15** zur Erwärmung der Fügepartner **1a,1b** in einer der Umformstation vorgelagerten Station vorgesehen sind. Die schmalen Auflageflächen **20,21** gewährleisten den eingegrenzten Erwärmungsbereich.

### Bezugszeichenliste

- 1a -: stempelscitiges Blech
- 1b -: matrizenseitiges Blech
- 2 -: Vollniet
- 3 -: Stempel
- 4 -: Matrize
- 5 -: Niederhalter
- 6 -: Kühlkörper/Niederhalter
- 7 -: Kühlkörper/Matrize
- 8 -: Luftkühlrippen
- 9 -: Stromlinien
- 10 -: oberer Kontaktschuh
- 11 -: oberer Kontaktschuh
- 12 -: unterer Kontaktschuh
- 13 -: unterer Kontaktschuh
- 14 -: oberere Elektrode
- 15 -: untere Elektrode
- 16 -: Auflagefläche am Niederhalter
- 17 -: Auflagefläche an der Matrize
- 18 -: Auflagefläche am Kontaktschuh
- 19 -: Auflagefläche am Kontaktschuh
- 20 -: Auflagefläche an einer Elektrode
- 21 -: Auflagefläche an einer Elektrode
- α -: Winkel der Auflagefläche des Niederhalters

## Patentansprüche

1. Verfahren zum Verbinden überlappt angeordneter Fügeteile von Werkstoffen mit bei Normaltemperatur extrem hoher Formänderungsfestigkeit, mit Hilfe eines aus Stempel (3), Niederhalter (5) und Matrize (4) bestehenden Fügewerkzeuges, durch Fügen mittels Stanznieten mit Halbhohlniet oder Vollniet oder durch Durchsetzfügen ohne Hilfsfügeteil, **dadurch gekennzeichnet, daß** in der künftigen Umformzone eine lokal und zeitlich begrenzte Erwärmung der Fügeteile (1a, 1b) durch elektrische Widerstandserwärmung erfolgt, wobei die Erwärmung durch Niederhalter (5) und Matrize (4) oder diesen bei- (14,15) oder vorgeordneten Elementen (10/11,12/13) erfolgt und die Erwärmung mit Beginn des Fügeprozesses oder unmittelbar davor ausgelöst wird und vor dem Beginn der Umformung in der Umformzone abgeschlossen ist.

2. Verfahren nach Anspruch 1, **dadurch gekennzeichnet, daß** die Erwärmung durch elektrische Widerstandserwärmung zwischen einem Niederhalter (5) und einer Matrize (4) erfolgt, wobei die Erwärmung mit dem Beginn des Arbeitshubes ausgelöst wird.

3. Verfahren nach Anspruch 1, **dadurch gekennzeichnet, daß** die Erwärmung durch elektrische Widerstandserwärmung zwischen einem oberen Ring aus einem oder mehreren Kontaktschuhen (10/11) und einem unteren Ring aus einem oder mehreren Kontaktschuhen (12/13) erfolgt, die jeweils um Niederhalter (5) und Matrize (4) angeordnet sind, wobei die Erwärmung mit dem Beginn des Arbeitshubes ausgelöst wird.

4. Verfahren nach Anspruch 1, **dadurch gekennzeichnet, daß** die Erwärmung durch elektrische Widerstandserwärmung zwischen einer Elektrode (14) und einer Elektrode (15) erfolgt, die einer ersten Station zugeordnet sind und die Umformung zeitlich anschließend in einer zweiten Station durchgeführt wird, wobei die Erwärmung unmittelbar vor dem Beginn der Umformung ausgelöst wird.

5. Verfahren nach einem der Ansprüche 1 bis 4, **dadurch gekennzeichnet, daß** die Umformzone auf eine Temperatur von 35 bis 250 °C erwärmt wird.

6. Verfahren nach Anspruch 4, **dadurch gekennzeichnet, daß** die Umformzone auf eine Temperatur von ca. 40 °C erwärmt wird.

7. Verfahren nach einem der Ansprüche 1 bis 6, **dadurch gekennzeichnet, daß** die elektrische Widerstandserwärmung gepulst erfolgt.

8. Verfahren nach einem der Ansprüche 1 bis 7, **dadurch gekennzeichnet, daß** die Dauer der Erwärmung auf einige Millisekunden begrenzt ist.

9. Vorrichtung zur Durchführung des Verfahrens nach einem der Ansprüche 1 bis 8 mit einem Stempel (3), einem Niederhalter (5) und einer Matrize (4), **dadurch gekennzeichnet, daß** der Niederhalter (5) und die Matrize (4) oder diesen bei- (14,15) oder vorgeordnete Elemente (10/11,12/13) als Pole zur elektrischen Widerstandserwärmung ausgebildet sind, wobei Niederhalter (5), Matrize (4), Kontaktschuh (10/11,12/13) mit entsprechenden Auflageflächen (16,17,18,19) versehen sind, so daß sich durch die Fügepartner (1a, 1b) Stromlinien (9) in örtlich begrenzter Ausbildung erstrecken, die den Erwärmungsbereich begrenzen.

10. Vorrichtung nach Anspruch 9, **dadurch gekennzeichnet, daß** der Niederhalter (5) und die Matrize (4) einer Vorrichtung zum mechanischen Fügen als Pole zur elektrischen Widerstandserwärmung ausgebildet sind, wobei die Auflagefläche (16) am Niederhalter (5) und die Auflagefläche (17) an der Matrize (4) eine ringförmig ausgebildete Erhebung dergestalt aufweisen, daß sich durch die Fügepartner (1a, 1b) Stromlinien (9) in örtlich begrenzter Ausbildung erstrecken, die den Erwärmungsbereich begrenzen.

11. Vorrichtung nach Anspruch 9, **dadurch gekennzeichnet, daß** ein oberer Ring aus einem oder mehreren (10/11) Kontaktschuhen, der um einen Niederhalter (5) angeordnet ist, und ein unterer Ring aus einem oder mehreren Kontaktschuhen (12/13), der um eine Matrize (4) angeordnet ist, vorgesehen sind, wobei die Auflageflächen der Kontaktschuhe (10/11,12/13) so ausgebildet sind, daß sich durch die Fügepartner (1a, 1b) Stromlinien (9) in örtlich begrenzter Ausbildung erstrecken, die den Erwärmungsbereich begrenzen.

12. Vorrichtung nach Anspruch 9, **dadurch gekennzeichnet, daß** eine Elektrode (14) und eine Elektrode (15) in einer ersten Station zur Erwärmung der Fügepartner (1a,1b) vorgesehen sind, wobei die Auflageflächen der Elektroden (14,15) so ausgebildet sind, daß sich durch die Fügepartner (1a,1b) Stromlinien (9) in örtlich begrenzter Ausbildung erstrecken, die den Erwärmungsbereich begrenzen, und eine Einrichtung zur Durchführung der Umformung in Form einer zweiten Station der ersten Station nachgeordnet ist.

13. Vorrichtung nach Anspruch 10, **dadurch gekennzeichnet, daß** die Auflagefläche (16) am Niederhalter (5) mit einer Schräge versehen ist.

14. Vorrichtung nach Anspruch 9, **dadurch gekennzeichnet, daß** die schrägen Auflageflächen am Niederhalter (5) einen Winkel von 2 bis 10° aufweisen.

15. Vorrichtung nach einem der Ansprüche 9 bis 14, **dadurch gekennzeichnet, daß** um Niederhalter (5) und Matrize (4), die Ringe aus Kontaktschuhen (10/11,12/13) oder die Elektroden (14,15) jeweils ein Kühlkörper (6) vorgesehen ist.

16. Vorrichtung nach Anspruch 15, **dadurch gekennzeichnet, daß** der Kühlkörper (6) mit Luftkühlrippen (8) versehen ist.

## Claims

1. Method for the joining of overlapped parts to be joined of materials with extremely high deformation strength at room temperature using a joining tool consisting of punch (3), blank holder (5) and die (4) by joining through self-piercing riveting with semi-hollow rivet or solid rivet, or clinch joining without joining auxiliary part **characterized in that** a local and time limited heating of the parts to be jointed (1a, 1b) takes place in the future forming zone by electrical resistance heating, whereby the heating is performed via the blank holder (5) and the die (4) or elements arranged directly adjacent to (14, 15) or preceding them (10/11, 12/13) and the heating is initiated at the beginning of the joining process or immediately before it and is completed before the beginning of the forming in the forming zone.

2. Method to Claim 1 **characterized in that** the heating takes place by electrical resistance heating between a blank holder (5) and a die (4), with the heating initiated at the beginning of the working stroke.

3. Method to Claim 1 **characterized in that** the heating by electrical resistance heating takes place between an upper ring consisting of one or several contact shoes (10/11) and a lower ring consisting of one or several contact shoes (12/13), which are arranged surrounding the blank holder (5) and the die (4) as well, with the heating initiated at the beginning of the working stroke.

4. Method to Claim 1 **characterized in that** the heating by electrical resistance heating takes place between an electrode (14) and an electrode (15), which are assigned to a first station and the forming is subsequently carried out in a second station, with the heating initiated immediately before the beginning of the forming.

5. Method to any of the Claims 1 to **4 characterized in that** the forming zone is heated to a temperature of 35°C to 250°C.

6. Method to Claim 5 **characterized in that** the forming zone is heated to a temperature of approx. 40°C.

7. Method to any of the Claims 1 to 6 **characterized in that** the electrical resistance heating takes place in a pulsed manner.

8. Method to any of the Claims 1 to 7 **characterized in that** the heating time period is limited to some milliseconds.

9. Device for the realization of the method to any of the Claims 1 to 8 with a punch (3), a blank holder (5) and a die (4) **characterized in that** the blank holder (5) and the die (4) or elements arranged directly adjacent to (14, 15) or directly preceding them (10/11, 12/13) are designed as poles for electrical resistance heating, whereby the blank holder (5), die (4), contact shoe (10/11, 12/13) are provided with appropriate bearing surfaces (16, 17, 18, 19) so that current lines (9) extend through the parts to be joined (1a, 1b) in a locally restricted extent, which limit the range of heating.

10. Device to Claim 9 **characterized in that** the blank holder (5) and the die (4) of a device for mechanical joining are designed as poles for electrical resistance heating, whereby the bearing surface (16) at the blank holder (5) and the bearing surface (17) at the die (4) are provided with a ring-shaped elevation such that current lines (9) extend through the parts to be joined (1a, 1b) in a locally restricted extent, which limit the range of heating.

11. Device to Claim 9 **characterized in that** an upper ring of one or several contact shoes (10/11) arranged surrounding a blank holder (5) and a lower ring of one or several contact shoes (12/13) surrounding a die (4) are provided, whereby the bearing surfaces of the contact shoes (10/11, 12/13) are designed such that current lines (9) extend through the parts to be joined (1a, 1b) in a locally restricted extent, which limit the range of heating.

12. Device to Claim 9 **characterized in that** an electrode (14) and an electrode (15) in a first station are provided for the heating of the parts to be joined (1a, 1b), whereby the bearing surfaces of the electrodes (14, 15) are designed such that current lines (9) extend through the parts to be joined (1a, 1b) in a locally restricted extent, which limit the range of heating, and a device for carrying out the forming operation in form of a second station is arranged succeeding the first station.

13. Device to Claim 10 **characterized in that** the bearing surface (16) at the blank holder (5) has an inclined surface.

14. Device to Claim 9 **characterized in that the** inclined bearing surfaces at the blank holder (5) have an angle of 2° to 10°.

15. Device to any of the Claims 9 to 14 **characterized in that** a cooling body (6) is provided surrounding the blank holder (5) and die (4), the rings of contact shoes (10/11, 12/13) or the electrodes (14, 15) each.

16. Device to Claim 15 **characterized in that** the cooling body (6) is provided with air cooling ribs (8).

## Revendications

1. Procédé pour joindre des éléments assemblés par recouvrement en matériaux, qui ont une résistance extrême à la déformation à des températures normales, à l'aide d'un outil de raccord composé d'un poinçon (3), d'un serre-flan (5) et d'une matrice (4) par assemblage à rivets estampés avec des rivets semi-tubulaires ou rivets pleins ou par assemblage à passage forcé sans élément auxiliaire, **caractérisé par** un échauffement régional et temporaire des pièces d'assemblage (1 a, 1 b) dans la future zone de déformation par échauffement de la résistance électrique qui se produit entre le serre-flan (5) et la matrice (4) ou les éléments conjugués (14, 15) ou placés en amont (10/11, 12/13), le réchauffement est déclenché au début du procédé d'assemblage ou juste avant celui-ci et terminé avant la déformation dans la zone respective.

2. Procédé selon la revendication n°. 1, **caractérisé par le fait que** l'augmentation de la température par échauffement de la résistance électrique se produit entre un serre-flan (5) et une matrice (4), et qu'elle est déclenchée quand la course de travail commence.

3. Procédé selon la revendication n°. 1, **caractérisé par le fait que** l'augmentation de la température par échauffement de la résistance électrique est réalisée entre une bague supérieure composée d'un ou de plusieurs souliers de contact (10/11) et une bague inférieure composée d'un ou de plusieurs souliers de contact (12/13) qui sont disposées chaque autour du serre-flan (5) et de la matrice (4), et qu'elle est déclenchée quand la course de travail commence.

4. Procédé selon la revendication n°. 1, **caractérisé par le fait que** l'augmentation de la température par échauffement de la résistance électrique se produit entre une électrode (14) et une électrode (15) qui font partie d'une première station, tandis que la déformation est faite plus tard dans une deuxième station, et l'échauffement est déclenché juste avant le début de la déformation.

5. Procédé selon l'une des revendications 1 à 4, **caractérisé par** le réchauffement de la zone de déformation jusqu'à une température de 35 à 250°C.

6. Procédé selon la revendication 5, **caractérisé par** le réchauffement de la zone de déformation jusqu'à une température d'environ 40°C.

7. Procédé selon l'une des revendications 1 à 6, **caractérisé par** une augmentation de la température par échauffement de la résistance électrique à pulsations.

8. Procédé selon une des revendications 1 à 7, **caractérisé par** la limitation de la durée de l' augmentation de la température à quelques millisecondes.

9. Dispositif pour l'exécution du procédé selon l'une des revendications 1 à 8 avec un poinçon (3), un serre-flan (5) et une matrice (4), **caractérisé par le fait que** le serre-flan (5) et la matrice (4) ou les éléments conjugués (14, 15) ou placés en amont (10/11, 12/13) servent de pôles pour l'échauffement de la résistance électrique, le serre-flan (5), la matrice (4) et les souliers de contact (10/11, 12/13) sont munis de surfaces d'appui (16, 17, 18, 19) de façon à ce que les pièces qui doivent être assemblées soient passées par des lignes de courant régionales, qui limitent la zone de réchauffement.

10. Dispositif selon la revendication n°. 9, **caractérisé par le fait que** le serre-flan (5) et la matrice (4) d'un dispositif d'assemblage mécanique servent de pôles pour l'échauffement de la résistance électrique, et que la surface d'appui (16) du serre-flan (5) et la surface d'appui (17) de la matrice (4) ont une saillie en bague afin de limiter la zone de réchauffement par les lignes de courant (9) régionales qui se forment dans les pièces (1a, 1b) qui doivent être assemblées.

11. Dispositif selon la revendication n°. 9, **caractérisé par le fait que** l'aménagement d'une bague supérieure qui est composée d'une ou de plusieurs souliers de contact (10/11) et disposée autour d'un serre-flan (5) est prévue ainsi qu'une bague inférieure qui est composée d'une ou de plusieurs souliers de contact (12/13) et disposée autour d'une matrice (4), les surfaces d'appui des souliers de contact (10/11, 12/13) étant construites de façon à ce que les pièces qui doivent être assemblées soient passées par des lignes de courant régionales, qui limitent la zone de réchauffement.

12. Dispositif selon la revendication n°. 9, **caractérisé par le fait que**, pour augmenter la température des pièces d'assemblage (1a, 1b), il y a une électrode (14) et une électrode (15) dans une première station. Les surfaces d'appui des électrodes (14/15) sont exécutées de façon à ce que des lignes de courant (9) régionales puissent se former à travers les pièces d'assemblage (1a, 1b) pour limiter la zone de réchauffement, et un dispositif de déformation en forme d'une deuxième station suit à la première station.

13. Dispositif selon la revendication n°. 10, **caractérisé par le fait que** la surface d'appui (16) du serre-flan (5) est munie d'une obliquité.

14. Dispositif selon la revendication n°. 9, **caractérisé par le fait que** la surface d'appui obliques (16) du serre-flan (5) ont un angle de 2 à 10°.

15. Dispositif selon l'une des revendications 9 à 14, **caractérisé par** l'aménagement de chaque fois un refroidisseur (6) autour le serre-flan (5), la matrice 4), les bagués de souliers de contact (10/11, 12/13) ou les électrodes (14/15).

16. Dispositif selon la revendication n°. 15, **caractérisé par le fait que** le refroidisseur (6) est muni d'ailettes de refroidissement à air (8).
